(19) Europäisches Patentamt
European Patent Office
Office européen des brevets

(11) **EP 1 848 218 A1**

(12) **EUROPEAN PATENT APPLICATION**

(43) Date of publication:
**24.10.2007 Bulletin 2007/43**

(51) Int Cl.:
*H04N 7/26* (2006.01)  *H04N 7/46* (2006.01)
*H04N 7/34* (2006.01)

(21) Application number: **06290663.1**

(22) Date of filing: **20.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Thomson Licensing**
**92100 Boulogne-Billancourt (FR)**

(72) Inventors:
• **Francois, Edouard**
**Thomson**
**92648 Boulogne Cedex (FR)**

• **Bottreau, Vincent**
**Thomson**
**92648 Boulogne Cedex (FR)**
• **Vieron, Jérôme**
**Thomson**
**92648 Boulogne Cedex (FR)**
• **Dagois, Pierre**
**Thomson**
**92648 Boulogne Cedex (FR)**

(74) Representative: **Hays, Bertrand et al**
**Thomson**
**46, Quai Alphonse Le Gallo**
**92100 Boulogne Billancourt (FR)**

(54) **Method for deriving motion data for high resolution pictures from motion data of low resolution pictures and coding and decoding devices implementing said method**

(57) The invention relates to a method for deriving motion data for at least one macroblock of a high resolution picture, called high layer macroblock, from motion data of macroblocks of a low resolution picture, called base layer macroblock. The method comprises the following steps:
- identifying (200) within a virtual structure made up of lines of nonoverlapping macroblocks, called virtual base layer macroblocks, the virtual base layer macroblocks corresponding to the high layer macroblock;
- deriving (210) motion data, for each corresponding virtual base layer macroblock, from motion data of corresponding base layer macroblocks; and
- deriving (220) motion data, for the high layer macroblock, from motion data of the corresponding virtual base layer macroblocks using an inter-layer prediction method such as one of the joint scalable video model inter-layer prediction methods.

**FIG.2**

**Description**

1. Field of the invention

The invention relates to a method for deriving motion data for at least one macroblock of a high resolution picture, called high layer macroblock, from motion data associated to at least one macroblock of a low resolution picture, called base layer macroblock. The invention also relates to coding and decoding devices implementing said method.

2. Background of the invention

State-of-art scalable hierarchical coding methods allow encoding the information hierarchically in order that it can be decoded at different resolution and/or quality levels. A data stream generated by a scalable coding device is thus divided into several layers, a base layer and one or more enhancement layers. These devices allow adapting a unique data stream to variable transmission conditions (bandwidth, error rate ...) and also to the capacities of reception devices (CPU, characteristics of reproduction device...). A spatially scalable hierarchical encoding (or decoding) method encodes (or decodes) a first part of data called base layer relating to low resolution pictures also called base layer pictures (BL pictures), and from this base layer encodes (or decodes) at least another data part called enhancement layer relating to high resolution pictures also called high layer pictures (HL pictures) or enhancement layer pictures. The motion data relating to the enhancement layer is possibly inherited (i.e. derived) from motion data relating to the base layer by a method called inter-layer prediction method or inter-layer inheriting method. Therefore each macroblock of a high resolution picture is predicted either according to a classical spatial or temporal prediction mode (e.g. intra prediction, bidirectional prediction mode, direct prediction mode, forward/backward prediction ...) or according to an inter-layer prediction mode. In this former case, motion data associated to a high resolution macroblock has to be derived or inherited from motion data (also called motion information) associated to macroblocks of low resolution pictures whatever the format of the low or high resolution pictures is, i.e. progressive or interlace. In this context the expression "motion data" includes not only motion vectors but more generally coding information such as partitioning pattern associated to macroblock/block of pixels of the high resolution picture for splitting said macroblock/block into several sub-blocks, coding modes associated to said blocks and picture reference indices associated to some blocks allowing to reference the picture used to predict said block.

3. Summary of the invention

The invention has the aim of alleviating at least one of these drawbacks. In particular it relates to a method for deriving motion data for at least one macroblock of a high resolution picture, called high layer macroblock, from motion data associated to macroblocks of a low resolution picture, called base layer macroblock, each picture being able to be coded either in frame or field mode and each macroblock in a frame coded picture being able to be coded either in frame or field mode. The method comprises the following steps:

- identifying within a virtual structure made up of lines of non-overlapping macroblocks, called virtual base layer macroblocks, the virtual base layer macroblocks corresponding to the at least one high layer macroblock on the basis of the frame or field mode of the at least one high layer macroblock;
- deriving motion data, for each corresponding virtual base layer macroblock, from motion data of corresponding base layer macroblocks on the basis of the frame or field mode of the corresponding base layer macroblocks and on the basis of the frame or field mode of the at least one high layer macroblock, the corresponding base layer macroblocks being identified within the low resolution picture on the basis of the frame or field mode of the low resolution picture and on the basis of the frame or field mode of the at least one high layer macroblock; and
- deriving motion data, for the at least one high layer macroblock, from motion data of the corresponding virtual base layer macroblocks using an inter-layer prediction method such as one of the joint scalable video model inter-layer prediction methods.

Preferentially, the inter-layer prediction method belongs to the set comprising:

- joint scalable video model dyadic inter-layer prediction method; and
- joint scalable video model extended spatial scalable inter-layer prediction method.

According to a preferred embodiment, if the at least one high layer macroblock is in field mode, the step for deriving motion data for a corresponding virtual base layer macroblock comprises the following steps:

- deriving motion data for the corresponding virtual base layer macroblock by vertically downsampling the motion data of corresponding base layer macroblocks, if the corresponding base layer macroblocks are in frame mode;
- deriving motion data for the corresponding virtual base layer macroblock by copying the motion data of the corresponding base layer macroblocks, if the the corresponding base layer macroblocks are in field mode.

According to a preferred embodiment, if the at least one high layer macroblock is in frame mode, the step for deriving motion data for a corresponding virtual base layer macroblock comprises the following steps:

- deriving motion data for the corresponding virtual base layer macroblock by merging the motion data of corresponding base layer macroblocks, if the corresponding base layer macroblocks are in field mode;
- deriving motion data for the corresponding virtual base layer macroblock by copying the motion data of the corresponding base layer macroblocks, if the the corresponding base layer macroblocks are in frame mode.

Advantageously, the method is part of a process for coding video signals and is part of a process for decoding video signals.

The invention also relates to a device for coding a sequence of high resolution pictures and a sequence of low resolution pictures, each picture being divided in non overlapping macroblocks and being able to be coded either in frame or field mode and each macroblock in a frame coded picture being able to be coded either in frame or field mode. The coding device comprises:

- first coding means for coding the low resolution pictures, the first coding means generating motion data for macroblocks of the low resolution pictures and a base layer data stream;
- inheritance means for deriving motion data for at least one macroblock of a high resolution picture, called high resolution macroblock from motion data of macroblocks a low resolution picture, called low resolution macroblocks; and
- second coding means for coding the high resolution pictures using the derived motion data, the second coding means generating an enhancement layer data stream.

The invention also relates to a device for decoding at least a sequence of high resolution pictures coded with the coding device according to the invention, the coded pictures arising in the form of a data stream, each picture being divided in non overlapping macroblocks and being able to be coded either in frame or field mode and each macroblock in a frame coded picture being able to be coded either in frame or field mode. The decoding device comprises:

- first decoding means for decoding at least a first part of the data stream in order to generate low resolution pictures and motion data for macroblocks of the low resolution picture;
- inheritance means for deriving motion data for at least one macroblock of a high resolution picture from motion data of macroblocks of a low resolution picture; and
- second decoding means for decoding at least a second part of the data stream using the derived motion data in order to generate high resolution pictures.

According to an important feature of the invention, the inheritance means of the coding and of the decoding devices comprise:

- means for identifying within a virtual structure made up of lines of non-overlapping macroblocks, called virtual base layer macroblocks, the virtual base layer macroblocks corresponding to the at least one high layer macroblock on the basis of the frame or field mode of the at least one high layer macroblock;
- means for deriving motion data, for each corresponding virtual base layer macroblock, from motion data of corresponding base layer macroblocks on the basis of the frame or field mode of the corresponding base layer macroblocks and on the basis of the frame or field mode of the at least one high layer macroblock, the corresponding base layer macroblocks being identified within the low resolution picture on the basis of the frame or field mode of the low resolution picture and on the basis of the frame or field mode of the at least one high layer macroblock; and
- inter-layer prediction means for deriving motion data, for the at least one high layer macroblock, from motion data of the corresponding virtual base layer macroblocks such as one of the joint scalable video model inter-layer prediction means.

Preferentially, the first coding means are an MPEG-4 AVC video encoder.
Advantageously, the coding device further comprises means for combining base layer data stream and enhancement layer data stream into a single data stream.
Preferentially, the first decoding means are an MPEG-4 AVC video decoder.

4. Brief description of the drawings

Other features and advantages of the invention will appear with the following description of some of its embodiments, this description being made in connection with the drawings in which:

- Figure 1 depicts a pair of macroblocks located vertically and coded either in frame mode (left part of the figure) or in field mode (right part of the figure);
- Figure 2 depicts a flowchart of the method according to the invention;
- Figure 3 illustrates UP and DOWN progressive macroblocks vertical downsampling process using a Frame-to-Field conversion macroblock function;
- Figure 4 illustrates UP and DOWN progressive macroblocks vertical downsampling process using a Frame-to-Field conversion macroblock function;
- Figure 5 illustrates TOP and BOTTOM field macroblocks merging process;

- Figure 6 illustrates interlace macroblock pair merging process using a Field-to-Frame macroblock conversion function;
- Figure 7 illustrates progressive BL macroblocks (vertical) downsampling process corresponding to the Frame-to-Field macroblock conversion function;
- Figure 8 depicts a flowchart of BL progressive macroblocks cleaning process;
- Figure 9 illustrates 4x4 and 8x4 sub-partitions merging process;
- Figure 10 depicts a flowchart of downsampled macroblock derivation process;
- Figure 11 illustrates different vertical downsampling cases;
- Figure 12 illustrates BL TOP and BOTTOM field macroblocks merging process corresponding to the Field-to-Frame macroblock conversion function;
- Figure 13 illustrates TOP and BOTTOM macroblocks in field pictures;
- Figure 14 illustrates TOP and BOTTOM field macroblocks in frame picture (MBAFF);
- Figure 15 illustrates the two steps of TOP and BOTTOM field macroblocks merging process;
- Figure 16 depicts a flowchart of upsampled macroblocks content merging process;
- Figure 17 depicts virtual base layer structures;
- Figure 18 illustrates a simplified derivation process;
- Figure 19 depicts a coding device for coding video signals according to the invention; and
- Figure 20 depicts a decoding device for decoding video signals according to the invention.

5. Detailed description of the preferred embodiments

In the SVC standard currently defined by JVT (MPEG & ITU) in the document JVT-R202 from ISO/IEC MPEG & ITU-T VCEG entitled « Scalable Video Coding - Joint Draft 5 » and referenced as JSVM5 in the sequel, the spatial scalability is only considered for progressive material. Motion inter-layer prediction between two (or more) successive spatial layers (the base one and enhancement one(s)) are only addressed in case of progressive video sequences. The invention proposes to extend these inter-layer prediction methods in order to support any combinations of interlace/progressive scalability.

According to many video coding standards an interlace picture, which comprises a top field interlace with a bottom field captured at different time instant, may be coded either as two field pictures (field picture mode), i.e. the two fields of the picture are coded separately, or as a frame picture (frame picture mode), i.e. the picture is coded as a single frame. MPEG-4 AVC described in the document ISO/IEC JTC 1/SC 29/WG 11 N5546 entitled « Text of 14496-2 Third Edition » allows that decision to be made either independently for the entire picture or independently for every two vertical macroblock-pair.

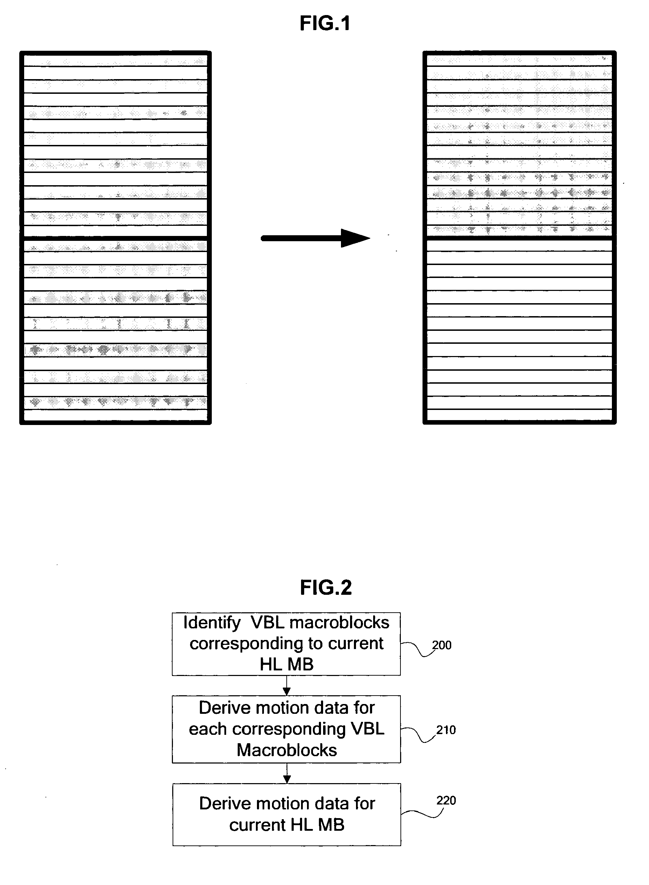

When the decision is made at picture level it is called PAFF coding (PAFF stands for Picture Adaptative Frame/Field) and when the decision is made at macroblock-pair level it is called MBAFF (stands for Macroblock Adaptative Frame/Field). More precisely, according to MPEG-4 AVC, when an interlace picture is encoded as a frame picture and if MBAFF is allowed, then each pair of vertical macroblocks (MBs) may be encoded as interlace, i.e. MBs of the pair are encoded in field mode (right part of the figure 1), or as progressive, i.e. MBs of the pair frame mode (left part of the figure 1). On Figure 1, the grey lines represent the even lines of the pictures interlace with the odd lines, i.e. the white lines, of the pictures. A progressive picture is always encoded as a frame picture. For each picture of a sequence of pictures, the reference indices are selected among two reference lists (list0 et list1) defined as follows:

- each reference index is associated to a given reference picture number;
- for each list, some reference indices are marked as invalid; and
- each 8x8 block, i.e. block of size 8 by 8 pixels, can use for each list a single reference index.

An invalid reference index corresponds to reference fields or frames not yet available (decoded) in the decoding process.

The method according to the invention allows to derive motion data for at least one macroblock of the high resolution picture (also called High Layer MacroBlock and noted HL MB) from motion data associated to macroblocks of the low resolution pictures (also called Base Layer MacroBlock and noted BL MB) whatever the format (interlace or progressive) of the high and low resolution sequences.

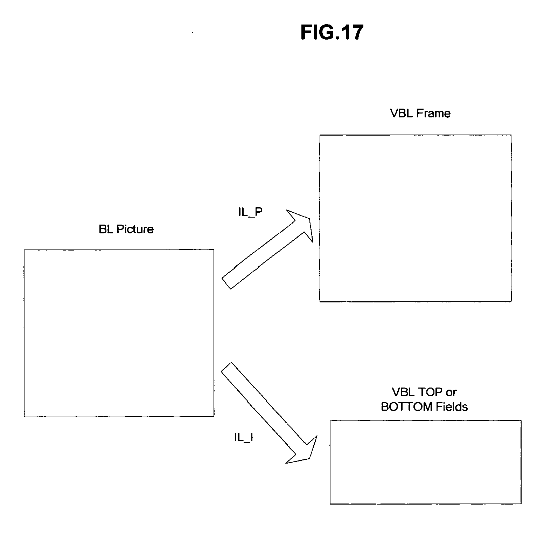

If the high resolution picture under consideration is interlace, then two inter-layer prediction modes as depicted on figure 17 are potentially available to encode or decode each HL macroblock:

1. inter-layer interlace (IL_I) mode for a HL MB in field mode: macroblock corresponding to TOP or BOTTOM field data.

2. inter-layer progressive (IL_P) mode for a HL MB in frame mode: macroblock corresponding to frame data.

The invention proposes a method for deriving motion data for at least one HL MB from BL MB(s). To this aim the invention consists in generating "Virtual Base Layer" (VBL) macroblocks from the BL MBs instead of modifying in depth the method described in JSVM5. A "Virtual Base Layer" (VBL) macroblock is a structure to which motion data is associated. The use of VBL macroblocks avoids the JSVM5 inter-layer prediction method modifications, since most of the issues coming from the interlace case are reported in the VBL data derivation. Practically, this method requires the use of at most 3 structures, a VBL Frame (with same size, i.e. height and width, as BL Pictures), a VBL TOP field and a VBL BOTTOM field (with same width as BL Pictures and half the height of BL Pictures), as illustrated in Figure 17. Each VBL structure is thus a virtual structure made up of lines of non-overlapping VBL macroblocks. A VBL frame is divided into VBL Frame MBs, a VBL TOP field is divided into VBL TOP field MBs, and a VBL BOTTOM field is divided into VBL BOTTOM field MBs. Motion data is associated to VBL MBs. VBL MBs can be viewed as an intermediate layer of macroblocks built from BL MBs. One of the joint scalable video model inter-layer prediction methods described in JSVM5 (e.g. as the Extended Spatial Scalability - ESS) for deriving motion data for MBs of high resolution pictures from BL MBs is then applied using the VBL MBs instead of the original BL MBs.

In reference to Figure 2, the inter-layer prediction method for a current HL MB achieves the following steps:

- identifying 200 in the virtual structure, the VBL macroblocks {c0,c1,...cN} corresponding to current HL MB on the basis of the frame or field mode of the current HL MB;

- deriving 210 motion data, for each corresponding VBL macroblock ci, i=0..N, positioned at (xi,yi), from motion data of BL macroblocks corresponding to the VBL MBs on the basis of the frame of field mode of these corresponding BL macroblocks and on the basis of the frame of field mode of current HL MB; and

- deriving 220 motion data for current HL MB using one of the joint scalable video model inter-layer prediction methods described in JSVM5 (e.g. the Extended Spatial Scalability - ESS) with the corresponding VBL MBs used instead of BL MBs and with a ratio equal to $h_{enh}/h_{base}$ in the vertical direction and a ratio equal to $W_{enh}/W_{base}$ in the horizontal direction, where $h_{enh}$ is the height and $W_{enh}$ the width of the HL pictures and where $h_{base}$ is the height and $W_{base}$ the width of the BL picture.

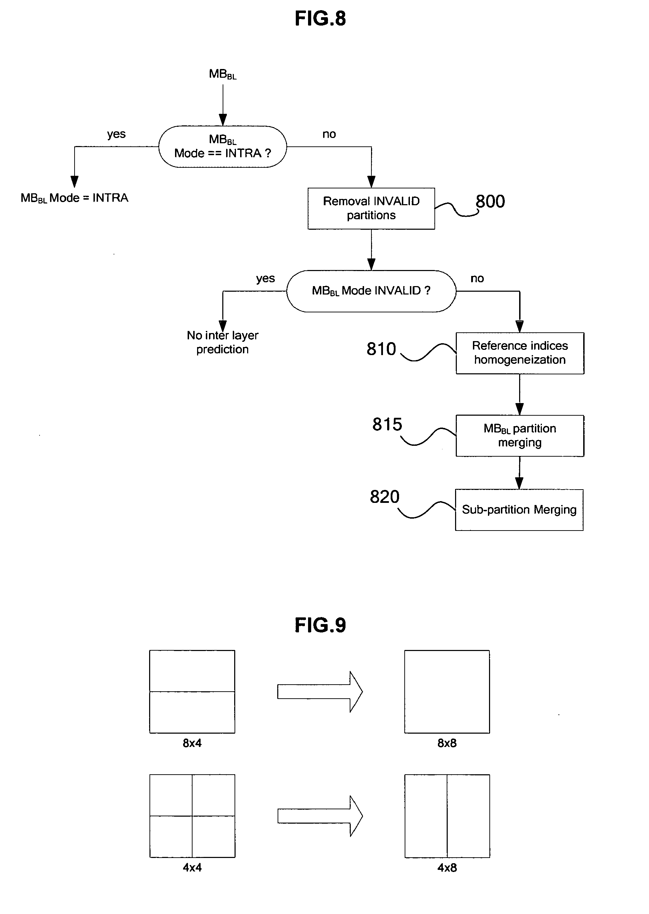

In Figures 8, 10, 16, the represented boxes are purely functional entities, which do not necessarily correspond to physical separated entities. Namely, they could be developed in the form of software, or be implemented in one or several integrated circuits

The step 200 consists in identifying the VBL macroblocks {c0,c1,...cN} corresponding to current HL MB. If HL MB mode is IL_P, i.e. VBL Frame MBs are used, the corresponding VBL MBs will be determined using the following process:

$$xs = [ x * w_{base} / w_{enh} ] / 16$$

$$ys = [ y * h_{base} / h_{enh} ] / 16$$

$$xe = [(x+15) * w_{base} / w_{enh} ] / 16$$

$$ye = [(y+15) * h_{base} / h_{enh} ] / 16$$

where (x,y) are the top left sample position of the HL MB under consideration, ($W_{base}$, $h_{base}$) the BL pictures dimensions and ($W_{enh}$, $h_{enh}$) the enhancement pictures dimensions. The corresponding VBL macroblocks {c0,c1,...cN} are those located inside window delimited by top left position (xs,ys) and bottom right position (xe, ye).

If HL MB mode is IL_I, i.e. VBL TOP or BOTTOM field MBs are used, then the corresponding VBL MBs will be determined using the following process:

$$xs = [ x * w_{base} / w_{enh} ] / 16$$

$$ys = [ y * (h_{base}/2) / h_{enh} ] / 16$$

$$xe = [ (x+15) * w_{base} / w_{enh} ] / 16$$

$$ye = [ (y+15) * (h_{base}/2) / h_{enh} ] / 16$$

The corresponding VBL macroblocks {c0,c1,...cN} are those located inside a window delimited by top left position (xs,ys) and bottom right position (xe,ye).

The step 210 consists in deriving motion data for each corresponding VBL MBs from motion data associated to BL macroblocks corresponding to said VBL MBs depending on the frame/field mode of the current HL MB and on the frame/field mode of the corresponding BL macroblocks.

If the inter-layer prediction mode of current HL MB is IL_I, then VBL MBs are in field mode and VBL TOP field MB and VBL BOTTOM field MB are generated.

VBL TOP field MB ci positioned at (xi,yi) (xi and yi being in macroblock units) in the virtual structure is generated as follows:

- IF BL picture is coded as a Frame Picture:

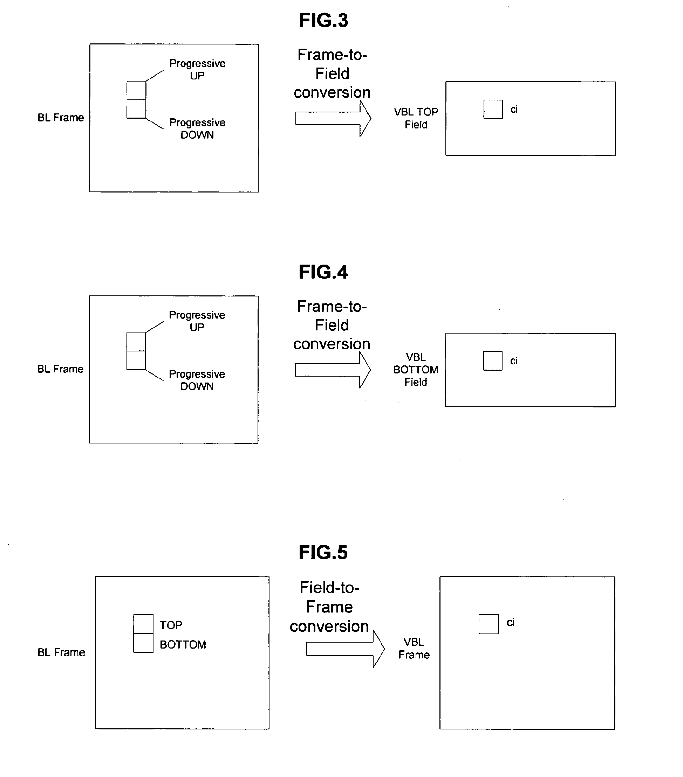

- then if BL MB positioned at (xi,2*yi) is, the VBL TOP field MB ci is a vertically downsampled version of the MB pair comprising the BL MB positioned at $(xi,2*yi+1)$ and the BL MB positioned at $(xi,2*yi)$. More precisely, the motion data associated to VBL TOP field MB ci is derived from the motion data associated to the BL MBs of said MB pair by a new downsampling process defined in the sequel. This new downsampling derives a vertically VBL TOP field MB downsampled macroblock version from the pair of progressive macroblocks as depicted on Figure 3 and thus corresponds to a frame to field conversion;

- else if BL MB positioned at $(xi,2*yi)$ is interlace, the motion data associated to VBL TOP field MB ci is the copy of the motion data associated to BL TOP field MB at position $(xi,2*yi)$.

- IF BL picture is coded as a Field Picture: the motion data associated to VBL TOP field MB ci is the copy of the motion data associated to BL TOP field MB at position $(xi,yi)$.

VBL BOTTOM field MB is generated as follows:

- IF BL picture is coded as a Frame Picture:

  - then if BL MB positioned at $(xi,2*yi+1)$ is progressive, the VBL BOTTOM field MB ci is a vertically downsampled version of the MB pair comprising the BL MB positioned at $(xi,2*yi+1)$ and the BL MB positioned at $(xi,2*yi)$. More precisely, the motion data associated to VBL BOTTOM field MB ci is derived from the motion data associated to the BL MBs of said MB pair by the new downsampling process (frame to field conversion) as depicted on Figure 4;
  - else if BL MB positioned at $(xi,2*yi+1)$ is interlace, the motion data associated to VBL BOTTOM field MB ci is the copy of the motion data associated to BL BOTTOM field MB at position $(xi,2*yi+1)$.

- IF BL picture is coded as a Field Picture, the motion data associated to VBL BOTTOM field MB ci is the copy of the motion data associated to BL BOTTOM field MB at position $(xi,yi)$.

If the inter-layer prediction mode of current HL MB is IL_P, then VBL MB is in frame mode and VBL Frame MB is generated as follows:

- IF BL picture is coded as a Frame Picture:

  - if BL MB positioned at $(xi,yi)$ is progressive, then the motion data associated to the VBL Frame MB ci is a direct copy of the motion data associated to the BL MB positioned at $(xi,yi)$;

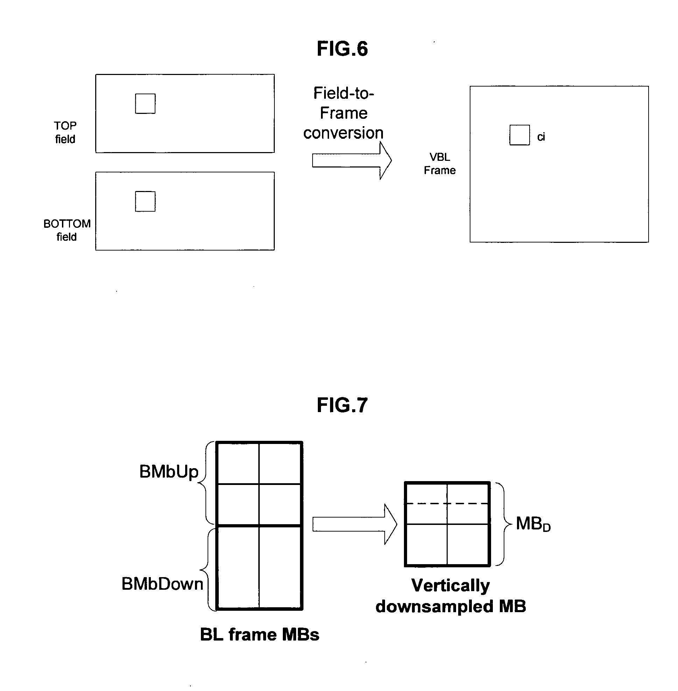

- else if the BL MB positioned at $(xi,yi)$ is interlace as depicted on Figure 5, the VBL Frame MB ci is a merged version of the MB pair comprising the BL MB positioned at $(xi,yi)$ and the BL MB positioned at $(xi,yi+1-2*(yi\%2))$. More precisely, the motion data associated to VBL Frame MB ci is derived from the motion data (i.e. MB partition/sub-partition, motion vectors ...) associated to the BL MBs of said MB pair by a new merging process defined in the sequel. This new merging allows to merge two interlace macroblocks into a progressive macroblock (more precisely it derives merged motion data) and thus corresponds to a field to frame conversion. In this case, the VBL Frame MBs UP and DOWN of a MB pair are identical because they are generated from the same BL TOP and BOTTOM field MBs.

- IF BL picture is coded as a Field Picture as depicted on Figure 6, VBL Frame MB ci is a merged version of BL TOP field MB at position $(xi,yi/2)$ and BL BOTTOM field MB at position $(xi,yi/2)$. More precisely, the motion data associated to VBL Frame MB ci is derived from the motion data associated to the BL MBs of said MB pair by the new merging process (field to frame conversion) defined in the sequel.

The new downsampling process (frame to field conversion) for deriving a vertically downsampled macroblock version of pairs of progressive macroblocks applies on a pair of BL frame macroblocks one UP macroblock denoted BMbUp and one DOWN macroblock denoted BMbDown, at position $(xi, 2* yi)$ and $(xi, 2* yi +1)$, encoded in progressive format. It consists in a vertical downsampling by a ratio of 2 (one example is depicted on Figure 7). The process outputs a downsampled field macroblock at position $(xi, yi)$. As depicted in Figure 7, each of the two BMbUp and BMbDown macroblocks, generate a 16x8 partition after the vertical downsampling. So basically the vertically downsampled macroblock is split in two 16x8 partitions. The vertical downsampling process could generate configurations forbidden by MPEG-4 AVC standard, such as:

- different reference indices inside 8x8 sub-partitions (for instance if one of the BL macroblocks is partitioned in four 8x8 blocks and if 2 neighboring up and down 8x8 blocks have not the same reference index then it would generate, once downsampled, an 8x8 block split into two 8x4 blocks having different reference indices); or
- sub-partitions with height of 2 pixels (for instance if an input 8x8 block is sub-partitioned in 8x4, it would generate once downsampled sub-partitions of size 8x2).

Therefore according to a preferred embodiment a cleaning process is first applied on the BL UP and DOWN MBs to avoid these configurations. Therefore, each macroblock of the pair of progressive BL macroblocks is first cleaned-up for avoiding partitions with invalid motion vectors. The process, depicted in Figure 8 for one progressive BL macroblock noted $MB_{BL}$, applies successively on the UP and DOWN MB of the pair. It basically achieves the three following steps:

- removal 800 of invalid partitions;

- reference indices homogenization 810; and

- merging 820 of 4x4 and 4x8 sub-partitions.

The step 800 consists in removing invalid partitions, i.e. those using invalid reference index, corresponding to reference field or frame not yet available in the decoding process.
If $MB_{BL}$ mode is not INTRA, the following process is applied:
For each list (0 and 1), the following applies:

- First, partitions having an invalid reference index are classified as INVALID and other partitions are classified as VALID.

- Then if at least one partition is VALID, then for each partition classified as INVALID, removal of invalid partitions is achieved. For instance, the sub-partitioning, motion vectors and reference index of a neighboring partition of the macroblock not classified as INVALID are copied to the INVALID partition. Neighboring partitions may be scanned in the following order: horizontal, vertical, diagonal. The partition is then classified as VALID.

If for both lists, all partitions are INVALID, $MB_{BL}$ mode is set to INVALID.
If $MB_{BL}$ mode is INTRA, then nothing is done.
The step 810, consists in homogenizing reference indices within $MB_{BL}$ partition. It applies only if $MB_{BL}$ mode is not set to INVALID.

- If BL macroblock partition is equal to 16x8 or 8x8, the following process is applied for each up partition of the macroblock.

  - If at least for one list $l$ (0 or 1), the down partition of the macroblock has a different reference index as its up partition, the following applies for each list $l$ (0 and 1).

    - the UP or DOWN partition using the minimum reference index $rl$ is identified (noted refPart).
    - The other partition is enforced to have the same reference index $rl$, sub-partitioning (if applicable) and motion vectors as refPart.

Possibly, at step 815 (optional step), a partition merging process is applied. Partitions are merged into a single partition if they are not sub-partitioned and if for each list their reference index and motion vector are identical. Macroblock mode is modified as follows:

- 16x8 and 8x16 are transformed into 16x16.

- 8x8 is transformed as follows:

  - 8x16 if left 8x8 blocks are merged together and right 8x8 blocks are merged together;
  - 16x8 if up 8x8 blocks are merged together and down 8x8 blocks are merged together; and
  - 16x16 if the four 8x8 blocks are merged together.

The step 820 consists in merging 4x4 and 8x4 sub-partitions. It applies only if $MB_{BL}$ mode is not set to INVALID. If $MB_{BL}$ mode is neither equal to INVALID nor to INTRA and macroblock partition is equal to 8x8, sub-partitions merging is applied to each 8x8 block of the macroblock with sub-partitioning equal to 8x4 or 4x4. 8x4 sub-partitions are merged into 8x8 sub-partitions, and 4x4 sub-partitions are merged into 4x8 sub-partitions as depicted on figure 9. For each merged area, for each list (0 and 1), the merged area motion vector is set to the average motion vector of the two parts to be merged.

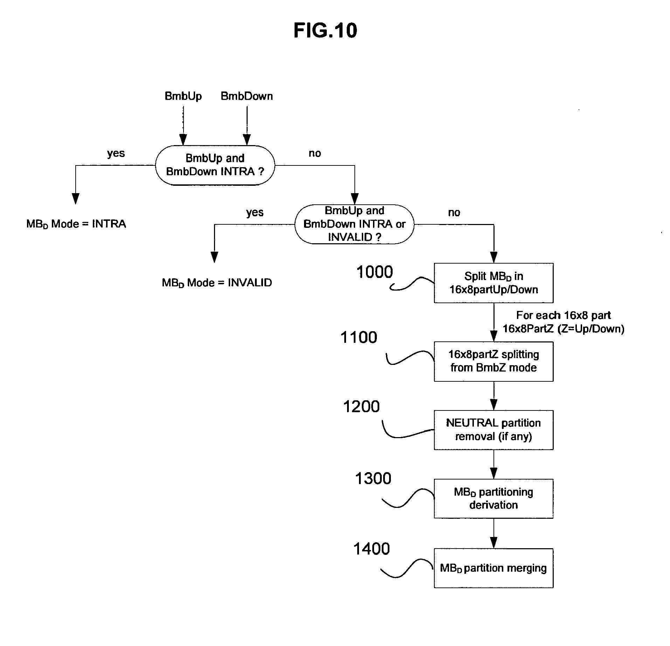

After the cleaning process a downsampled macroblock named $MB_D$ (cf. figure 7) is generated. It has two corresponding BL possibly cleaned macroblocks denoted BMbUp and BMbDown. The figure 10 depicts the flowchart of the process applied to generate the downsampled macroblock $MB_D$, i.e. generate the motion data associated to it.
If BMbUp and BMbDown are INTRA, $MB_D$ mode is set to INTRA.
Otherwise if BMbUp and BMbDown are INTRA or INVALID (three cases are considered here, BMbUp is INTRA and BMbDown is INVALID or BMbUp is INVALID and BMbDown is INTRA or both macroblocks BMbUp and BMbDown are INVALID), $MB_D$ mode is set to INVALID.
Otherwise, the following process applies:

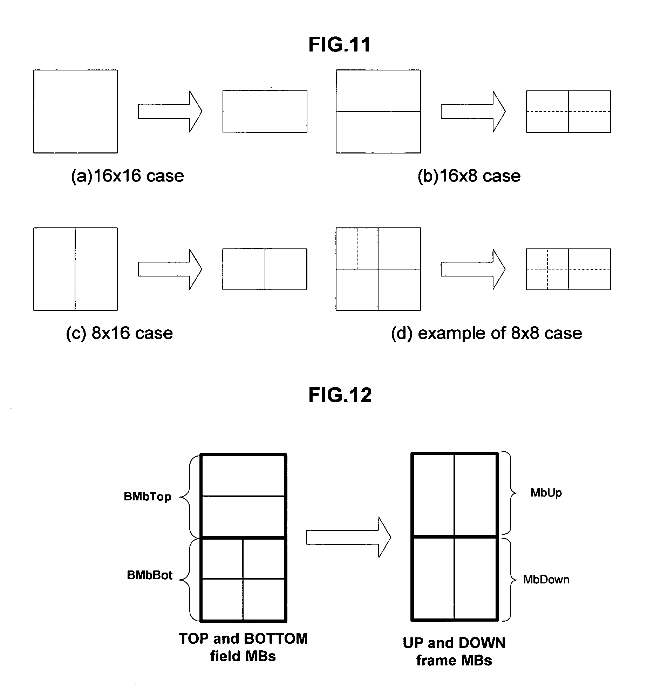

At step 1000, $MB_D$ is split in two 16x8 parts (noted 16x8PartUp and 16x8PartDown in the sequel). Each 16x8 part has one corresponding BL frame macroblock (16x8PartUp corresponds to BMbUp, 16x8PartDown corresponds to BMbDown).
At step 1200, each 16x8 part 16x8PartZ (with Z being replaced by Up or Down) is built using the following process (illustrated by Figure 11).

- if BMbZ is INVALID or INTRA, 16x8PartZ is classified as NEUTRAL.

- otherwise if BMbZ partition is 16x16, 16x8PartZ partition is 16x8 (Figure 11 a). For each list, 16x8PartZ reference index is those of BMbZ.

- otherwise 16x8PartZ partition is 8x8. The two 8x8 blocks of 16x8PartZ are then sub-partitioned as follows.

   - if BMbZ partition is 16x8, sub-partitioning is 8x4 for both blocks (Figure 11 b).

   - otherwise if BMbZ partition is 8x16, sub-partitioning is 8x8 for both blocks (Figure 11 c).

   - otherwise if BMbZ partition is 8x8, for W being replaced by left and right, the following applies (example in Figure 11 d).

      - if at least one of the W BMbZ 8x8 blocks is split in 4x8, the W 8x8 block sub-partitioning is 4x4.

      - otherwise the W 8x8 block sub-partitioning is 8x4.

- Reference indices and motion vectors are derived for each derived partition / sub-partition of 16x8PartZ as follows:

   - The top left 4x4 block coordinates (b4X, b4Y) of the considered partition / sub-partition are identified.
   - The reference indices and motion vectors of the 4x4 block of BMbZ with coordinates (b4X, b4Y/2) are copied to the considered partition / sub-partition.

The step 1200 consists in removing NEUTRAL partition if any. If one of the two 16x8 parts is classified as NEUTRAL, its content (partitioning / sub-partitioning, reference indices and motion vectors) is copied from the other 16x8 part content.
The step 1300 consists in deriving MB$_D$ partitioning as follows:

- If 16x8PartUp and 16x8PartDown partitions are 16x8, MB$_D$ partitioning is 16x8

- Otherwise, MB$_D$ partitioning is set to 8x8.

Possibly, at step 1400 (optional step), the partition merging process of step 815 is applied.

The new merging process (field to frame conversion) allows to merge a TOP field macroblock (i.e. coming from BL TOP field) and a BOTTOM field macroblock (i.e. coming from BL BOTTOM field) into a pair of progressive (frame) macroblocks (UP and DOWN). It applies to two BL field macroblocks encoded in interlace format. The first considered macroblock is a TOP field macroblock denoted BMbTop. The second one is a BOTTOM field macroblock denoted BMbBot. The output of the process is a pair of progressive UP and DOWN macroblocks as depicted on figure 12. BMbTop and BMbBot are defined as follows:

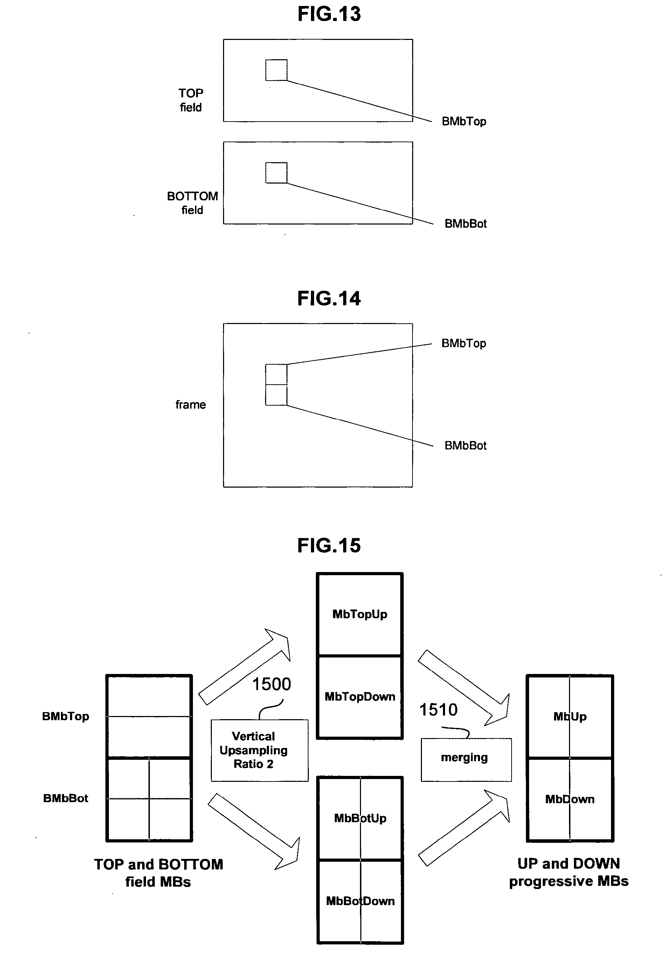

- if BL picture is encoded as a Field picture, BMbTop is the macroblock of BL TOP field and BMbBot is the macroblock of BL BOTTOM field at position (xi, yi) as depicted on Figure 13;
- otherwise (i.e. if BL picture is encoded as a Frame picture), BMbTop and BMbBot are macroblocks of BL Frame at position (xi, 2*yi) and (xi, 2*yi+1) - this only applies if the BL Frame macroblocks pair is encoded in interlace mode as depicted on Figure 14.

In reference to Figure 15, the process comprises the two following steps:

- a step 1500 for upsampling vertically BMbTop and BMbBot with a ratio of 2, this step generating two upsampled TOP macroblocks, namely MbTopUp and MbTopDown, and two upsampled BOTTOM macroblocks, namely MbBotUp and MbBotDown;

- a step 1510 for merging the upsampled macroblocks MbTopUp and MbBotUp into one macroblock MbUp, and the upsampled macroblocks MbTopDown and MbBotDown into one macroblock MbDown.

The step 1500 consists in macroblock upsampling with a ratio 2 in the vertical direction. It consists in applying directly the ESS upsampling process defined in JSVM5 (Joint Video Team (JVT) of ISO/IEC MPEG & ITU-T VCEG JVT-Q202, "Scalable Video Coding - Joint Draft 4", J.Reichel, H.Schwarz, M.Wien) with a ratio 1 in the horizontal direction and a ratio 2 in the vertical direction.
The step 1510 applies on two macroblocks MbIn1 and MbIn2 and generates one merged macroblock MbOut. In reference to figure 15, if the macroblocks MbIn1 and MbIn2 refer to macroblocks MbTopUp and MbBotUp respectively then MbOut refers to MbUp and if the macroblocks MbIn1 and MbIn2 refer to macroblocks MbTopDown and MbBotDown respectively then MbOut refers to MbDown.
According to a first embodiment, the step 1510 consists in first associating the motion data of MbIn1 to MbOut.

- If MbOut is not INTRA, the invalid partitions are removed by the invalid partitions removal process described previously;
- If MbOut is classified INVALID, MbIn2 associated motion data is associated to MbOut. Then if MbOut is not INTRA, the invalid partitions are removed by the invalid partitions removal process described previously.

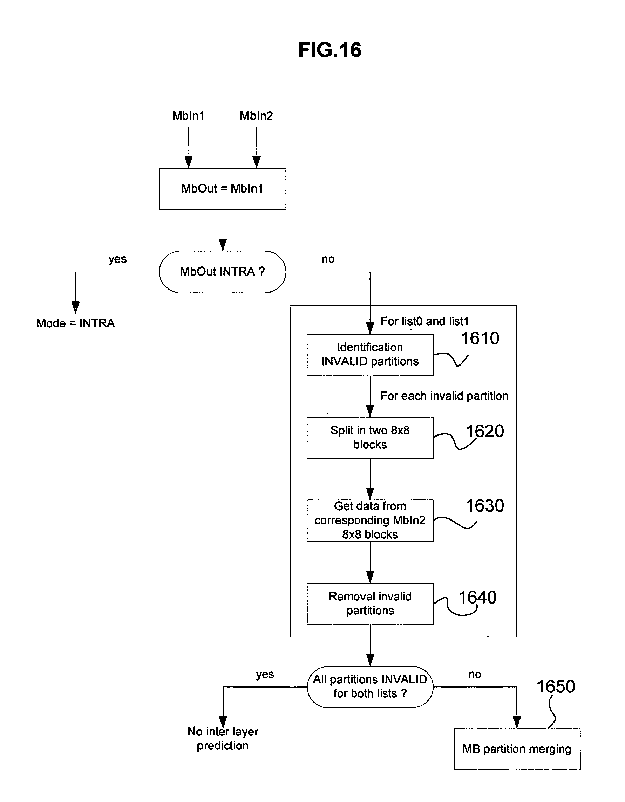

According to a preferred embodiment and in reference to Figure 16, the step 1510 consists in applying the following sub-steps:

At sub-step 1600, MbIn1 associated motion data is associated to MbOut. Then, if MbOut is not INTRA, the following process applies:

- For each list (0 and 1), the following applies:

    - At sub-step 1610, partitions having an invalid reference index are classified as INVALID and other partitions are classified as VALID. INVALID partitions are processed as follows:

        - At sub-step 1620, MbOut partitioning is enforced to 8x8. The INVALID partition is divided in 8x8 partitions. MbOut mode is enforced to 8x8. For each 8x8 partition, the following applies:

            - At sub-step 1630, if the corresponding 8x8 block in MbIn2 uses a valid reference index, sub-partitioning (if any), reference index and motion vectors of this MbIn2 8x8 block are copied into the considered MbOut 8x8 partition. This partition is classified as VALID. Otherwise, the MbOut 8x8 partition is classified as INVALID.

        - If at least one MbOut 8x8 partition is VALID, then, at sub-step 1640, for each partition classified as INVALID, removal of invalid partitions is achieved. For instance the sub-partitioning, motion vectors and reference index of a neighboring partition of the macroblock not classified as INVALID are copied to the INVALID partition. Neighboring partitions may be scanned in the following order: horizontal, vertical, diagonal. The partition is then classified as VALID.

If for both lists, all partitions are INVALID, mode is set to INVALID.
At sub-step 1650, MbOut partitions may be merged by applying the partition merging process of step 815. This sub-step 1650 is optional.

According to a specific embodiment, the whole method may be simplified when the following conditions are verified:

- BL picture is progressive;
- HL picture is interlace; and
- the height ($h_{enh}/2$) of the HL fields is greater than or equal to the height $h_{base}$ of the BL pictures.

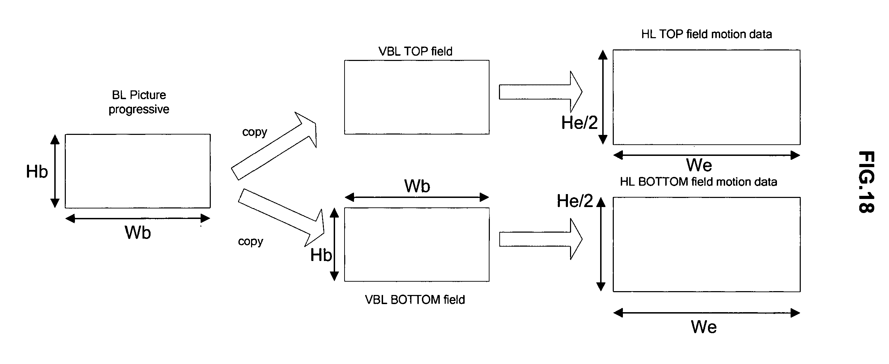

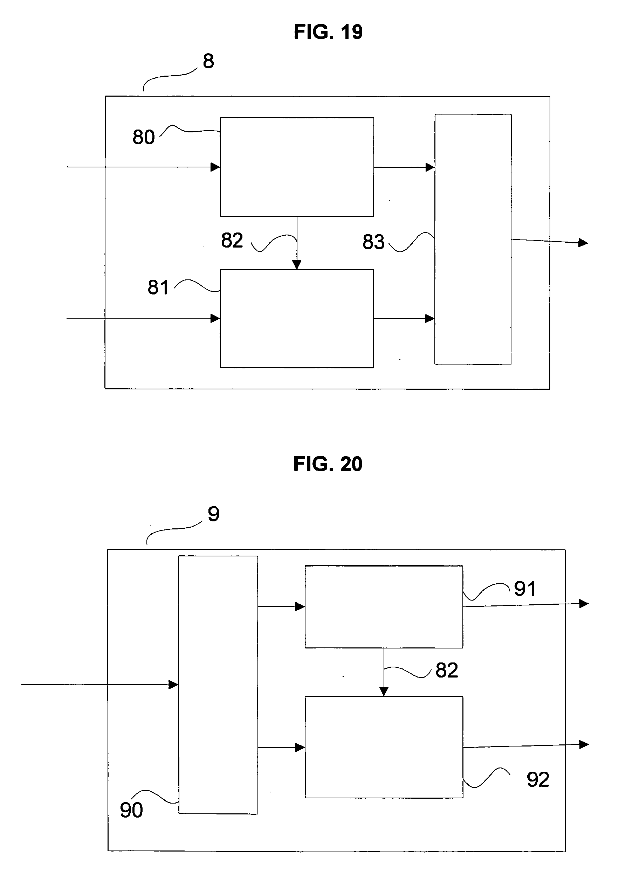

These conditions are notably verified when the BL pictures are in progressive CIF format and the HL pictures are in SD interlace format. When these conditions are verified as depicted on figure 18, the VBL TOP field MBs and VBL BOTTOM field MBs are derived by directly copying the BL frame MBs. More precisely the motion data associated to a VBL TOP field MB ci in the VBL TOP field structure is a direct copy of the motion data associated to the BL frame MB positioned at (xi, yi). The motion data associated to a VBL BOTTOM field MB ci in the VBL BOTTOM field structure is a direct copy of the motion data associated to the BL frame MB positioned at (xi, yi). In this case, the VBL TOP field and VBL BOTTOM field structures have the same dimensions as BL pictures. This simplified method avoids the use of the new downsampling process depicted on figure 10 (steps 1000 to 1400).
The step for deriving motion data for current HL MB from the VBL TOP and BOTTOM field MBs respectively uses one of the inter-layer prediction processes described in JSVM5 with a ratio equal to $h_{enh}/(2h_{base})$ (instead $h_{enh}/h_{base}$ for step 200) in the vertical direction and a ratio of $W_{enh}/W_{hase}$ in the horizontal direction. When these conditions are verified, the process for deriving the VBL frame MBs is not modified.
The method according to the invention may be used by a process for coding video signals and by a process for decoding video signals as the one described in JSVM5. When used by a process for coding video signals, the encoding process selects to encode current HL MB using either an inter-layer prediction mode or a classical prediction mode. If inter-layer prediction is selected and if current HL MB is a frame MB then the inter-layer prediction mode is IL_P and the corresponding Frame VBL MBs are computed else if HL MB is a field MB then the inter-layer prediction mode is IL_I and the corresponding VBL TOP field MBs and VBL BOTTOM field MBs are computed.
The invention also concerns a coding device 8 depicted on figure 19. The coding device 8 comprises a first coding module 80 for coding the low resolution pictures. The module 80 generates a base layer data stream and motion data for said low resolution pictures. Preferentially the module 80 is adapted to generate a base layer data stream compatible with MPEG4 AVC standard. The coding device 8 comprises inheritance means 82 used to derive motion data for high resolution pictures from the motion data of the low resolution pictures generated by the first coding module 80. The inheritance means 82 are adapted to implement the steps 200, 210, and 220 of the method according to the invention. The coding device 8 comprises a second coding module 81 for coding the high resolution pictures. The second coding module 81 uses the motion data derived by the inheritance means 82 in order to encode the high resolution pictures. The second coding module 81 thus generates an enhancement layer data stream. Preferentially, the coding device 8 also comprises a module 83 (for example a multiplexer) that combines the base layer data stream and the enhancement layer data stream provided by the first coding module 80 and the second coding module 81 respectively to generate a single data stream. Therefore, if a HL MB is encoded by the second coding module 81 using the inter-layer prediction mode, the motion data related to said HL MB are not coded in the data stream (or only partly coded since quarter-pel motion refinement may possibly be coded) since they are derived from the motion data related to the BL MBs that are provided by the module 80. This allows to save some bits. On the other hand, if a HL MB is encoded using a classical mode (e.g. bidirectional mode) then motion data related to said HL MB are coded in the data stream.

The invention also concerns a decoding device 9 depicted on figure 20 for decoding high resolution pictures from a data stream generated with the coding device 8. The decoding device 9 comprises a first decoding module 91 for decoding a first part of the data stream, called base layer data stream, in order to derive generate low resolution pictures and motion data for said low resolution pictures. Preferentially the module 91 is adapted to decode a data stream compatible with MPEG4 AVC standard. The decoding device 9 comprises inheritance means 82 used to derive motion data for high resolution pictures from the motion data of the low resolution pictures generated by the first decoding module 91. The decoding device 9 comprises a second decoding module 92 for decoding a second part of the data stream, called enhancement layer data stream. The second decoding module 92 uses the motion data derived by the inheritance means 82 in order to decode a second part of the data stream. The second decoding module 92 thus generates the high resolution pictures. Advantageously, the device 9 comprises also an extracting module 90 (e.g. a demultiplexer) for extracting from the received data stream the base layer data stream and the enhancement layer data stream.

According to another embodiment the decoding device receives two data streams: a base layer data stream and an enhancement layer data stream. In this case the device 9 does not comprise an extracting module 90.

The invention is not limited to the embodiments described. Particularly, the invention described for two sequences of pictures, i.e. two spatial layers, may be used to encode more than two sequences of pictures.

**Claims**

1.  Method for deriving motion data for at least one macroblock of a high resolution picture, called high layer macroblock, from motion data associated to macroblocks of a low resolution picture, called base layer macroblock, each picture being able to be coded either in frame or field mode and each macroblock in a frame coded picture being able to be coded either in frame or field mode **characterized in that** it comprises the following steps:

   - identifying (200) within a virtual structure made up of lines of non-overlapping macroblocks, called virtual base layer macroblocks, the virtual base layer macroblocks corresponding to said at least one high layer macroblock on the basis of the frame or field mode of said at least one high layer macroblock;
   - deriving (210) motion data, for each corresponding virtual base layer macroblock, from motion data of corresponding base layer macroblocks on the basis of the frame or field mode of said corresponding base layer macroblocks and on the basis of the frame or field mode of said at least one high layer macroblock, said corresponding base layer macroblocks being identified within said low resolution picture on the basis of the frame or field mode of said low resolution picture and on the basis of the frame or field mode of said at least one high layer macroblock; and
   - deriving (220) motion data, for said at least one high layer macroblock, from motion data of the corresponding virtual base layer macroblocks using an inter-layer prediction method such as one of the joint scalable video model inter-layer prediction methods.

2.  Method according to claim 1, wherein said inter-layer prediction method belongs to the set comprising:

   - joint scalable video model dyadic inter-layer prediction method; and
   - joint scalable video model extended spatial scalable inter-layer prediction method.

3.  Method according to claim 1 or 2, wherein if said at least one high layer macroblock is in field mode, the step for deriving (210) motion data for a corresponding virtual base layer macroblock comprises the following steps:

   - deriving motion data for said corresponding virtual base layer macroblock by vertically downsampling the motion data of corresponding base layer macroblocks, if said corresponding base layer macroblocks are in frame mode;
   - deriving motion data for said corresponding virtual base layer macroblock by copying the motion data of said corresponding base layer macroblocks, if the said corresponding base layer macroblocks are in field mode.

**4.** Method according to any of claims 1 to 3, wherein if said at least one high layer macroblock is in frame mode, the step for deriving (210) motion data for a corresponding virtual base layer macroblock comprises the following steps:

- deriving motion data for said corresponding virtual base layer macroblock by merging the motion data of corresponding base layer macroblocks, if said corresponding base layer macroblocks are in field mode;
- deriving motion data for said corresponding virtual base layer macroblock by copying the motion data of said corresponding base layer macroblocks, if the said corresponding base layer macroblocks are in frame mode.

**5.** Method according to any of claims 1 to 4, wherein said method is part of a process for coding video signals.

**6.** Method according to any of claims 1 to 4, wherein method is part of a process for decoding video signals.

**7.** Device (8) for coding a sequence of high resolution pictures and a sequence of low resolution pictures, each picture being divided in non overlapping macroblocks and being able to be coded either in frame or field mode and each macroblock in a frame coded picture being able to be coded either in frame or field mode, said device comprising:

- first coding means (80) for coding said low resolution pictures, said first coding means generating motion data for macroblocks of said low resolution pictures and a base layer data stream;
- inheritance means (82) for deriving motion data for at least one macroblock of a high resolution picture, called high resolution macroblock from motion data of macroblocks a low resolution picture, called low resolution macroblocks; and
- second coding means (81) for coding said high resolution pictures using said derived motion data, said second coding means generating an enhancement layer data stream;

**characterized in that** the inheritance means (82) comprise:

- means for identifying within a virtual structure made up of lines of non-overlapping macroblocks, called virtual base layer macroblocks, the virtual base layer macroblocks corresponding to said at least one high layer macroblock on the basis of the frame or field mode of said at least one high layer macroblock;
- means for deriving motion data, for each corresponding virtual base layer macroblock, from motion data of corresponding base layer macroblocks on the basis of the frame or field mode of said corresponding base layer macroblocks and on the basis of the frame or field mode of said at least one high layer macroblock, said corresponding base layer macroblocks being identified within said low resolution picture on the basis of the frame or field mode of said low resolution picture and on the basis of the frame or field mode of said at least one high layer macroblock; and
- inter-layer prediction means for deriving motion data, for said at least one high layer macroblock, from motion data of the corresponding virtual base layer macroblocks such as one of the joint scalable video model inter-layer prediction means.

**8.** Device according to claim 7, wherein said first coding means are an MPEG-4 AVC video encoder.

**9.** Device according to claim 7 or 8, wherein said device further comprises means (83) for combining base layer data stream and enhancement layer data stream into a single data stream.

**10.** Device (9) for decoding at least a sequence of high resolution pictures coded with the coding device (8) according to any of claims 7 to 9, the coded pictures arising in the form of a data stream, each picture being divided in non overlapping macroblocks and being able to be coded either in frame or field mode and each macroblock in a frame coded picture being able to be coded either in frame or field mode, said device comprising:

- first decoding means (91) for decoding at least a first part of said data stream in order to generate low resolution pictures and motion data for macroblocks of said low resolution picture;
- inheritance means (82) for deriving motion data for at least one macroblock of a high resolution picture from motion data of macroblocks of a low resolution picture; and
- second decoding means (92) for decoding at least a second part of said data stream using said derived motion data in order to generate high resolution pictures;

**characterized in that** the inheritance means (82) comprise:

- means for identifying within a virtual structure made up of lines of non-overlapping macroblocks, called virtual base layer macroblocks, the virtual base layer macroblocks corresponding to said at least one high layer macroblock on the basis of the frame or field mode of said at least one high layer macroblock;

- means for deriving motion data, for each corresponding virtual base layer macroblock, from motion data of corresponding base layer macroblocks on the basis of the frame or field mode of said corresponding base layer macroblocks and on the basis of the frame or field mode of said at least one high layer macroblock, said corresponding base layer macroblocks being identified within said low resolution picture on the basis of the frame or field mode of said low resolution picture and on the basis of the frame or field mode of said at least one high layer macroblock; and

- inter-layer prediction means for deriving motion data, for said at least one high layer macroblock, from motion data of the corresponding virtual base layer macroblocks such as one of the joint scalable video model inter-layer prediction means.

11. Device according to claim 9, wherein said first decoding means are an MPEG-4 AVC video decoder.

# FIG.1

# FIG.2

Identify VBL macroblocks corresponding to current HL MB — 200

Derive motion data for each corresponding VBL Macroblocks — 210

Derive motion data for current HL MB — 220

## FIG.3

BL Frame

Progressive UP

Progressive DOWN

Frame-to-Field conversion

VBL TOP Field

$c_i$

## FIG.4

BL Frame

Progressive UP

Progressive DOWN

Frame-to-Field conversion

VBL BOTTOM Field

$c_i$

## FIG.5

BL Frame

TOP

BOTTOM

Field-to-Frame conversion

VBL Frame

$c_i$

# FIG.6

TOP
field

BOTTOM
field

Field-to-
Frame
conversion

VBL
Frame

ci

# FIG.7

BMbUp

BMbDown

**BL frame MBs**

$MB_D$

**Vertically
downsampled MB**

# FIG.8

MB_BL

MB_BL
Mode == INTRA ?

yes → MB_BL Mode = INTRA

no → Removal INVALID partitions ⟿ 800

MB_BL Mode INVALID ?

yes → No inter layer prediction

no → 810 ⟿ Reference indices homogeneization

815 ⟿ MB_BL partition merging

820 ⟿ Sub-partition Merging

# FIG.9

8x4 ⟹ 8x8

4x4 ⟹ 4x8

# FIG.10

```
        BmbUp      BmbDown
          │           │
          ▼           ▼
  yes  ┌─────────────────┐   no
 ◄─────│   BmbUp and     │─────►
       │ BmbDown INTRA ? │
       └─────────────────┘
  │
  ▼
MB_D Mode = INTRA
```

MB_D Mode = INTRA

```
              yes  ┌──────────────┐  no
             ◄─────│  BmbUp and   │─────►
                   │ BmbDown INTRA or │
                   │   INVALID ?  │
                   └──────────────┘
             │
             ▼
```

MB_D Mode = INVALID

**1000**

```
┌──────────────────┐
│  Split MB_D in   │
│ 16x8partUp/Down  │
└──────────────────┘
```

For each 16x8 part
16x8PartZ (Z=Up/Down)

**1100**

```
┌──────────────────┐
│ 16x8partZ splitting │
│  from BmbZ mode  │
└──────────────────┘
```

**1200**

```
┌──────────────────┐
│ NEUTRAL partition │
│  removal (if any) │
└──────────────────┘
```

**1300**

```
┌──────────────────┐
│ MB_D partitioning │
│    derivation    │
└──────────────────┘
```

**1400**

```
┌──────────────────┐
│ MB_D partition merging │
└──────────────────┘
```

## FIG.11

(a)16x16 case

(b)16x8 case

(c) 8x16 case

(d) example of 8x8 case

## FIG.12

BMbTop

BMbBot

TOP and BOTTOM
field MBs

MbUp

MbDown

UP and DOWN
frame MBs

## FIG.13

## FIG.14

## FIG.15

# FIG.16

MbIn1     MbIn2

MbOut = MbIn1

yes     MbOut INTRA ?     no

Mode = INTRA

For list0 and list1

Identification INVALID partitions    1610

For each invalid partition

Split in two 8x8 blocks    1620

Get data from corresponding MbIn2 8x8 blocks    1630

Removal invalid partitions    1640

yes     All partitions INVALID for both lists ?     no    1650

No inter layer prediction

MB partition merging

# FIG.17

VBL Frame

BL Picture

IL_P

IL_I

VBL TOP or
BOTTOM Fields

## FIG.18

## FIG. 19

## FIG. 20

**European Patent Office**

**EUROPEAN SEARCH REPORT**

Application Number

EP 06 29 0663

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VIERON J ET AL: "CE4: Inter-layer prediction for interlace/progressive SVC" JOINT VIDEO TEAM (JVT) OF ISO/IEC MPEG & ITU-T VCEG (ISO/IEC JTC1/SC29/WG11 AND ITU-T SG16 Q.6), 19TH MEETING GENOVA, SWITZERLAND, 01-07 APRIL, 2006, JVT-S018, [Online] 27 March 2006 (2006-03-27), pages 1-16, XP002410346 Genova, Switzerland Retrieved from the Internet: URL:http://ftp3.itu.ch/av-arch/jvt-site/2006_04_Geneva/> [retrieved on 2006-12-04] | 1,3,5-8, 10,11 | INV. H04N7/26 H04N7/46 H04N7/34 |
| Y | * page 3, paragraph 3.1 - page 10, paragraph 3.5.5; figures 1-3 * ----- | 2,9 | |
| Y | VIERON ET AL: "Inter-layer prediction for scalable interlace/progressive video coding" JOINT VIDEO TEAM (JVT) OF ISO/IEC MPEG & ITU-T VCEG (ISO/IEC JTC1/SC29/WG11 AND ITU-T SG16 Q.6), 18TH MEETING: BANGKOK, TH, 17-23 JANUARY, 2006, JVT-R014, [Online] 10 January 2006 (2006-01-10), pages 1-20, XP002410347 Bangkok, Thailand Retrieved from the Internet: URL:http://ftp3.itu.ch/av-arch/jvt-site/2006_01_Bangkok/> [retrieved on 2006-12-04] * the whole document * ----- -/-- | 2 | TECHNICAL FIELDS SEARCHED (IPC) H04N |

The present search report has been drawn up for all claims

| Place of search | Date of completion of the search | Examiner |
|---|---|---|
| Munich | 5 December 2006 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 29 0663

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | REICHEL ET AL: "Joint Scalable Video Model JSVM-5"<br>JOINT VIDEO TEAM (JVT) OF ISO/IEC MPEG & ITU-T VCEG (ISO/IEC JTC1/SC29/WG11 AND ITU-T SG16 Q.6) ,18TH MEETING: BANGKOK, THAILAND, 14-20 JANUARY, 2006, JVT-R202, [Online] 20 January 2006 (2006-01-20), pages 1-43, XP002410348<br>Bangkok, Thailand<br>Retrieved from the Internet:<br>URL:http://ftp3.itu.ch/av-arch/jvt-site/2006_01_Bangkok/> [retrieved on 2006-12-04]<br>* page 4 - page 5 *<br>* page 10, paragraph 1.2.5 - page 14, paragraph 1.2.5.1.4; figure 1 *<br>----- | 2,9 | |
| Y | US 2003/165274 A1 (HASKELL BARIN GEOFFRY [US] ET AL) 4 September 2003 (2003-09-04)<br>* figure 4 *<br>----- | 9 | |
| A | EP 1 622 388 A (THOMSON LICENSING [FR]) 1 February 2006 (2006-02-01)<br>* the whole document *<br>----- | 1-11 | TECHNICAL FIELDS SEARCHED (IPC) |

The present search report has been drawn up for all claims

| Place of search | Date of completion of the search | Examiner |
|---|---|---|
| Munich | 5 December 2006 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**                    EP 06 29 0663

This annex lists the patent family members relating to the patent documents cited in  the above-mentioned European search report.
The members are as contained in the European Patent Office EDP file on
The European Patent Office is in no way liable for these particulars which are merely given for the purpose of information.

05-12-2006

| Patent document cited in search report | | Publication date | Patent family member(s) | | Publication date |
|---|---|---|---|---|---|
| US 2003165274 | A1 | 04-09-2003 | NONE | | |
| EP 1622388 | A | 01-02-2006 | CN | 1719735 A | 11-01-2006 |
| | | | FR | 2872973 A1 | 13-01-2006 |
| | | | JP | 2006025428 A | 26-01-2006 |
| | | | KR | 20060049850 A | 19-05-2006 |
| | | | MX | PA05007297 A | 26-01-2006 |
| | | | US | 2006013307 A1 | 19-01-2006 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- ISO/IEC JTC 1/SC 29/WG 11 N5546. Text of 14496-2

- **J.REICHEL ; H.SCHWARZ ; M.WIEN.** Scalable Video Coding - Joint Draft 4. *Joint Video Team (JVT) of ISO/IEC MPEG & ITU-T VCEG JVT-Q202*